# EUROPÄISCHE PATENTSCHRIFT

(11) **EP 2 419 465 B1**
(45) Veröffentlichungstag und Bekanntmachung des Hinweises auf die Patenterteilung: **03.09.2014**
(21) Anmeldenummer: 10713600.4
(22) Anmeldetag: 30.03.2010
(51) Int. Cl.: C08G 18/00, C08G 18/32, C08G 18/48, C08G 18/66, C08G 18/73, C08G 18/83, C08G 18/08, C09J 175/06, B32B 21/08, B32B 7/12

(54) **VERWENDUNG VON POLYURETHANKLEBSTOFF AUS POLYESTERDIOLEN, POLYETHERDIOLEN UND SILANVERBINDUNGEN ZUR HERSTELLUNG FOLIENBESCHICHTETER MÖBEL**
USE OF POLYURETHANE ADHESIVE MADE OF POLYESTER DIOLS, POLYETHER DIOLS AND SILANE COMPOUNDS FOR PRODUCING FILM-COATED FURNITURE
UTILISATION D'ADHÉSIF POLYURÉTHANE À BASE DE POLYESTERDIOLS, DE POLYÉTHERDIOLS ET DE COMPOSÉS SILANE POUR PRODUIRE DES MEUBLES PELLIPLAQUÉS

(30) Priorität: 14.04.2009 EP 09157866
(43) Veröffentlichungstag der Anmeldung: 22.02.2012
(73) Patentinhaber: BASF SE, 67056 Ludwigshafen (DE)
(72) Erfinder: HARTZ, Oliver, 67117 Limburgerhof (DE); WEISS,Axel, 67346 Speyer (DE); SCHUMACHER, Karl-Heinz, 67433 Neustadt (DE); MEYER, Axel, 69115 Heidelberg (DE); AYDIN, Oral, 68165 Mannheim (DE)
(86) Internationale Anmeldenummer: PCT/EP2010/054143
(87) Internationale Veröffentlichungsnummer: WO 2010/118949

(56) Entgegenhaltungen:
- EP-A1- 0 953 623
- WO-A1-2008/006733
- WO-A2-2007/082826
- US-A1- 2006 183 845
- DATABASE WPI Week 200577 Thomson Scientific, London, GB; AN 2005-752196 XP002590986 & JP 2005 272592 A (MITSUBISHI PLASTICS IND LTD) 6. Oktober 2005 (2005-10-06)

## Beschreibung

Die Erfindung betrifft die Verwendung eines Polyurethanklebstoffs zur Herstellung von folienbeschichteten Möbeln. Der Klebstoff besteht aus zwei Komponenten, wobei die erste Komponente mindestens zwei verschiedene Polyurethane enthält, welche Carboxylgruppen aufweisen und die Polyurethane von Polyesterdiolen abgeleitete Einheiten und von Polyetherdiolen abgeleitete Einheiten aufweisen, wobei das Gewichtsmengenverhältnis der Summe aller von Polyesterdiolen abgeleiteten Einheiten zur Summe aller von Polyetherdiolen abgeleiteten Einheiten von 1:9 bis 9:1 beträgt, und wobei die zweite Komponente mindestens eine gegenüber Carboxylgruppen reaktive Silanverbindung enthält.

Zur Herstellung von folienbeschichteten Möbeln oder Möbelteilen werden geeignete Kunststofffolien auf Formkörper, z.B. aus Kunststoff, Metall, Holz, Holzwerkstoffen oder Fasermaterialien mittels eines Klebstoffs dauerhaft aufgebracht. Hierfür werden in der Regel wässrige Dispersionsklebstoffe auf Basis von Polyurethanen eingesetzt werden. Zur Verbesserung der anwendungstechnischen Eigenschaften wurden häufig Isocyanate als Vernetzer eingesetzt. Gewünscht werden Isocyanat-freie Systeme. Aus der WO 2008/006733 sind wässrige Polyurethanklebstoffe mit Silanverbindungen als Additive bekannt. Bekannte Klebstoffdispersionen sind noch nicht in jeder Hinsicht optimal, insbesondere hinsichtlich der für die thermische Aktivierung des Klebstoffs benötigten Aktivierungstemperatur, welche bei bekannten Klebstoffen auf Basis von Polyurethandispersionen relativ hoch ist. Hohe Aktivierungstemperaturen sind insbesondere dann problematisch, wenn wärmeempfindliche Substrate oder sehr dünne und dadurch besonders wärmeempfindliche Folien eingesetzt werden sollen.

Aufgabe der Erfindung war, die anwendungstechnischen Eigenschaften von Polyurethandispersionen für die technische Kaschierung von Möbeln weiter zu verbessern, insbesondere hinsichtlich einer optimierten Aktivierungstemperatur für den Klebstoff. Gleichzeitig sollen die Verklebungen aber auch eine gute Wärmestandfestigkeit aufweisen.

Gegenstand der Erfindung ist die Verwendung eines Klebstoffs bestehend aus einer ersten, wässrigen Komponente und aus einer zweiten Komponente zur Herstellung von folienbeschichteten Möbeln,
wobei die erste Komponente mindestens ein erstes Polyurethan und mindestens ein von dem ersten Polyurethan verschiedenes zweites Polyurethan enthält,
wobei das erste Polyurethan von Polyesterdiolen abgeleitete Einheiten aufweist und das zweite Polyurethan mit von Polyetherdiolen abgeleitete Einheiten aufweist, und
wobei mindestens eines der beiden Polyurethane, vorzugsweise beide Polyurethane, Carboxylgruppen aufweist,
wobei das Gewichtsmengenverhältnis der Summe aller von Polyesterdiolen abgeleiteten Einheiten zur Summe aller von Polyetherdiolen abgeleiteten Einheiten von 1:9 bis 9:1, bevorzugt von 1:4 bis 4:1 besonders bevorzugt von 1:1 bis 4:1 beträgt, und wobei die zweite Komponente mindestens eine gegenüber Carboxylgruppen reaktive Silanverbindung enthält.

Durch die erfindungsgemäße Verwendung von Polyurethanen mit von Polyetherdiolen abgeleiteten Einheiten ist es in besonders einfacher Weise möglich, die Aktivierungstemperatur von wärmeaktivierbaren Klebstoffen einzustellen. Das ist insbesondere von Vorteil bei der Folienkaschierung unter Verwendung von wärmeempfindlichen Folien oder bei wärmeempfindlichen Substraten.

In einer Ausführungsform sind die von Polyesterdiolen abgeleiteten Einheiten und die von Polyetherdiolen abgeleiteten Einheiten in verschiedenen Polyurethanen enthalten, das heißt der Klebstoff enthält mindestens zwei verschiedene Typen von Polyurethanen. Hierbei kann die erste Komponente des Klebstoffs
(a) 20-80 Gewichtsteile, vorzugsweise 40-70 Gewichtsteile mindestens eines ersten Polyurethans mit von Polyesterdiolen abgeleiteten Einheiten und ohne von Polyetherdiolen abgeleiteten Einheiten,
(b) 10-70 Gewichtsteile, vorzugsweise 20-50 Gewichtsteile mindestens eines zweiten Polyurethans mit von Polyetherdiolen abgeleiteten Einheiten und ohne von Polyesterdiolen abgeleiteten Einheiten und
(c) 0-60 Gewichtsteile, vorzugsweise 0 bis 30, z.B. 10 bis 30 Gewichtsteile weiterer, von Polyurethanen verschiedener Polymere enthalten, z.B. Polyvinylacetat, Ethylen/Vinylacetat Copolymere, Polyacrylatcopolymerdispersionen oder StyrolButadien-Dispersionen.

Vorzugsweise ist das erste Polyurethan aufgebaut aus
a) Diisocyanaten,
b) Polyesterdiolen mit einem Molgewicht von größer 500 bis 5000 g/mol,
c) Carbonsäuregruppen aufweisenden Diolen, und
d) optional weiteren, von a)-c) verschiedenen, ein- oder mehrwertigen Verbindungen mit reaktiven Gruppen, ausgewählt aus alkoholischen Hydroxygruppen, primären Aminogruppen, sekundären Aminogruppen und Isocyanatgruppen.

Vorzugsweise ist das zweite Polyurethan aufgebaut aus
a) Diisocyanaten,
b) Polyetherdiolen mit einem Molgewicht von 240 bis 5000 g/mol,
c) Carbonsäuregruppen aufweisenden Diolen, und
d) optional weitere, von a)-c) verschiedene, ein- oder mehrwertige Verbindungen mit reaktiven Gruppen, ausgewählt aus alkoholischen Hydroxygruppen, primären Aminogruppen, sekundären Aminogruppen und Isocyanatgruppen.

Vorzugsweise sind die Polyetherdiole ausgewählt aus Polytetrahydrofuran und Polypropylenoxid. Vorzugsweise sind die Polyesterdiole ausgewählt aus Umsetzungsprodukten zweiwertiger Alkohole mit zweiwertigen Carbonsäuren und Polyesterdiolen auf Lacton-Basis.

Vorzugsweise sind die Polyurethane jeweils zu mindestens 40 Gew.-%, besonders bevorzugt zu mindestens 60 Gew.-% und ganz besonders bevorzugt zu mindestens 80 Gew.-% aus Diisocyanaten, Polyetherdiolen bzw. Polyesterdiolen aufgebaut. Bevorzugt enthält das erste Polyurethan Polyesterdiole in einer Menge von mehr als 10 Gew.-%, besonders bevorzugt größer 30 Gew. %, insbesondere größer 40 Gew. % oder größer 50 Gew. %, ganz besonders bevorzugt größer 60 Gew. %, bezogen auf das erste Polyurethan. Bevorzugt enthält das zweite Polyurethan Polyetherdiole in einer Menge von mehr als 10 Gew.-%, besonders bevorzugt größer 30 Gew. %, insbesondere größer 40 Gew. % oder größer 50 Gew. %, ganz besonders bevorzugt größer 60 Gew. %, bezogen auf das zweite Polyurethan.

Verwendung gemäß einem der vorhergehenden Ansprüche, dadurch gekennzeichnet, dass das erste Polyurethan in reinem Zustand kristallin ist und einen Schmelzpunkt im Bereich von 30 bis 150 °C hat wobei das zweite Polyurethan amorph sein kann.

Vorzugsweise ist zumindest das erste Polyurethan in reinem Zustand kristallin. Das erste Polyurethan hat vorzugsweise. einen Schmelzpunkt größer 30 °C, insbesondere größer 40 °C, besonders bevorzugt größer 50 °C oder auch größer 60 oder größer 70 °C; im Allgemeinen ist der Schmelzpunkt nicht größer als 150 °C, insbesondere nicht größer als 100 °C. Der Schmelzpunkt liegt daher insbesondere in einem Bereich von 30 bis 150 °C, besonders bevorzugt von 40 bis 150, und ganz besonders bevorzugt von 50 bis 100 °C und insbesondere von 50 bis 80 °C. Das zweite Polyurethan kann in reinem Zustand amorph sein. Zumindest das erste Polyurethan hat vorzugsweise eine Schmelzenthalpie von mehr als 20 J/g. Die Messung des Schmelzpunktes und der Schmelzenthalpie erfolgt dabei nach der Methode der Differential Scanning Calorimetry. Die Messung erfolgt an Polyurethanfilmen einer Dicke von 200 µm, die vor der Messung in einem Umluft-Trockenschrank bei 40 °C 72 Stunden getrocknet wurden. Zur Vorbereitung der Messung werden ca. 13 mg des Polyurethans in Pfännchen gefüllt. Die Pfännchen werden verschlossen, die Proben auf 120 °C aufgeheizt, mit 20 K/min abgekühlt und 20 Stunden bei 20 °C getempert. Die so vorbereiteten Proben werden nach der DSC-Methode nach DIN 53765 vermessen, wobei die Probe mit 20 K/min aufgeheizt wird. Als Schmelztemperatur wird die Peaktemperatur gemäß DIN 53765 ausgewertet, die Schmelzenthalpie wird wie in Bild 4 der DIN 53765 ermittelt.

Geeignete Diisocyanate sind beispielsweise solche der Formel X(NCO)2, wobei X für einen aliphatischen Kohlenwasserstoffrest mit 4 bis 15 C-Atomen, einen cycloaliphatischen oder aromatischen Kohlenwasserstoffrest mit 6 bis 15 C-Atomen oder einen araliphatischen Kohlenwasserstoffrest mit 7 bis 15 C-Atomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanato-methylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanato-cyclohexyl)methans (HMDI) wie das trans/trans-, das cis/cis- und das cis/trans-Isomere sowie aus diesen Verbindungen bestehende Gemische. Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 1:9 bis 9:1, insbesondere 1:4 bis 4:1 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z. B. Uretdiongruppen tragen.

Im Hinblick auf gute Filmbildung und Elastizität kommen als Polyesterdiole und als Polyetherdiole vornehmlich höhermolekulare Diole in Betracht, die ein Molekulargewicht von über 500 und bis zu 5000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl).

Polyesterdiole sind z. B. aus Ullmanns Enzyklopädie der technischen Chemie, 4. Auflage, Band 19, S. 62 bis 65 bekannt. Bevorzugt werden Polyesterdiole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH2)y-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als zweiwertige Alkohole kommen z. B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH2)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Zusätzlich zu den Polyesterdiolen oder zu den Polyetherdiolen können gegebenenfalls auch Polycarbonat-Diole, wie sie z. B. durch Umsetzung von Phosgen mit einem Überschuss von den als Aufbaukomponenten für die Polyesterpolyole genannten niedermolekularen Alkohole erhalten werden können, mitverwendet werden.

Gegebenenfalls können auch Polyesterdiole auf Lacton-Basis verwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)z-COOH ableiten, wobei z eine Zahl von 1 bis 20 ist und ein H-Atom einer Methyleneinheit auch durch einen C₁- bis C₄-Alkylrest substituiert sein kann. Beispiele sind e-Caprolacton, ß-Propiolacton, g-Butyrolacton und/oder Methyl-e-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des e-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von BF3 oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts von 240 bis 5000, und vor allem 500 bis 4500. Bevorzugt sind Polyetherdiole, die zu weniger als 20 Gew.-% aus Ethylenoxid bestehen.

Gegebenenfalls können auch Polyhydroxyolefine mitverwendet werden, bevorzugt solche mit 2 endständigen Hydroxylgruppen, z. B. α,-ω-Dihydroxypolybutadien, α,-ω-Dihydroxypolymethacrylester oder α,-ω-Dihydroxypolyacrylester als Monomere (c1). Solche Verbindungen sind beispielsweise aus der EP-A 622 378 bekannt. Weitere geeignete Polyole sind Polyacetale, Polysiloxane und Alkydharze.

Die Härte und das Elastizitätsmodul der Polyurethane lassen sich, falls erforderlich, erhöhen, wenn als Diole neben den Polyesterdiolen bzw. neben den Polyetherdiolen noch davon verschiedene, niedermolekulare, monomere Diole mit einem Molekulargewicht von etwa 60 bis 500, vorzugsweise von 62 bis 200 g/mol, eingesetzt werden. Als niedermolekulare monomere Diole werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer geradzahligen Anzahl von C-Atomen sowie Pentan-1,5-diol und Neopentylglykol bevorzugt werden. Beispiele sind Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Polyesterdiole bzw. der Polyetherdiole, bezogen auf die Gesamtmenge aller Diole, 10 bis 100 mol-% und der Anteil der niedermolekularen, monomeren Diole, bezogen auf die Gesamtmenge aller Diole, 0 bis 90 mol-%. Besonders bevorzugt beträgt das Verhältnis der polymeren Diole zu den monomeren Diolen 0,1 : 1 bis 5:1, besonders bevorzugt 0,2 : 1 bis 2 : 1.

Um eine Wasserdispergierbarkeit der Polyurethane zu erreichen, können die Polyurethane zusätzlich Monomere als Aufbaukomponente enthalten, die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge aller Aufbaukomponenten der Polyurethane wird im allgemeinen so bemessen, dass die Molmenge der (potentiell) hydrophilen Gruppen, bezogen auf die Gewichtsmenge aller Monomere, 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln. Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im Allgemeinen 0 bis 10, bevorzugt 0 bis 6 Gew.-%, bezogen auf die Gewichtsmenge aller Monomere. Bevorzugte Monomere mit nichtionischen hydrophilen Gruppen sind Polyethylenoxiddiole mit mindestens 20 Gew.-% Ethylenoxid, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammoniumgruppen, insbesondere protonierte tertiäre Aminogruppen oder quartäre Ammoniumgruppen. Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere sind z. B. in Ullmanns Enzyklopädie der technischen Chemie, 4. Auflage, Band 19, S.311-313 und beispielsweise in der DE-A 1 495 745 ausführlich beschrieben.

Als (potentiell) kationische Monomere sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 C-Atomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, wie sie auch in der US-A 3,412,054 beschrieben sind. Insbesondere sind Verbindungen der allgemeinen Formel (c1) 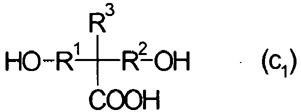 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt. Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Mindestens eines der Polyurethane, vorzugsweise sowohl das erste als auch das zweite Polyurethan, weisen Carboxylgruppen auf. die Carboxylgruppen können in die Polyurethane eingeführt werden durch die vorstehend genannten aliphatischen, cycloaliphatischen, araliphatischen oder aromatischen Carbonsäuren, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, insbesondere Dimethylolpropionsäure.

Als weitere Monomere mit gegenüber Isocyanaten reaktiven Aminogruppen kommen Aminocarbonsäuren wie Lysin, β-Alanin oder die in der DE-A 20 34 479 genannten Addukte von aliphatischen diprimären Diaminen an a,ß-ungesättigte Carbon- oder Sulfonsäuren in Betracht. Solche Verbindungen gehorchen beispielsweise der Formel (c2)

H2N-R4-NH-R5-X (c2)

in der R⁴ und R⁵ unabhängig voneinander für eine C₁- bis C₆-Alkandiyl-Einheit, bevorzugt Ethylen und X für COOH oder SO₃H stehen. Besonders bevorzugte Verbindungen der Formel (c2) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist. Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin (TEA) Triisopropylamin (TIPA) oder Morpholin, bzw. dessen Derivate. Besonders bevorzugt liegen die Sulfonat- oder Carboxylatgruppen in Form ihrer Salze mit einem Alkaliion oder einem Ammoniumion als Gegenion vor.

Mehrwertige Monomere, welche gegebenenfalls auch Bestandteile des Polyurethans sind, dienen im Allgemeinen der Vernetzung oder der Kettenverlängerung. Es sind im Allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z. B. Trimethylolpropan, Glycerin oder Zucker. Ferner kommen Monoalkohole in Betracht, die neben der Hydroxylgruppe eine weitere gegenüber Isocyanaten reaktive Gruppe tragen wie Monoalkohole mit einer oder mehreren primären und/oder sekundären Aminogruppen, z. B. Monoethanolamin. Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt. Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan. Die Amine können auch in blockierter Form, z. B. in Form der entsprechenden Ketimine (siehe z. B. CA-A 1 129 128), Ketazine (vgl. z. B. die US-A 4,269,748) oder Aminsalze (s. US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden. Bevorzugt werden Gemische von Di- und Triaminen verwendet, besonders bevorzugt Gemische von Isophorondiamin (IPDA) und Diethylentriamin (DETA). Die Polyurethane enthalten bevorzugt 1 bis 30, besonders bevorzugt 4 bis 25 mol-%, bezogen auf die Gesamtmenge aller Aufbaukomponenten eines Polyamins mit mindestens 2 gegenüber Isocyanaten reaktiven Aminogruppen. Für den gleichen Zweck können auch höher als zweiwertige Isocyanate eingesetzt werden. Handelsübliche Verbindungen sind beispielsweise das Isocyanurat oder das Biuret des Hexamethylendiisocyanats.

Einwertige Monomere, die gegebenenfalls mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, welche die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten sowie ihre jeweiligen Molmengen so gewählt, dass das Verhältnis A : B mit
A der Molmenge an Isocyanatgruppen und
B der Summe aus der Molmenge der Hydroxylgruppen und der Molmenge der funktionellen Gruppen, die mit Isocyanaten in einer Additionsreaktion reagieren können,
   0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1. Die eingesetzten Monomere tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Aufbaukomponenten zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt.

Die Polyurethane liegen vorzugsweise als wässrige Dispersion vor und werden in dieser Form verwendet.

Die in dem erfindungsgemäßen Klebstoff eingesetzte Silanverbindung hat vorzugsweise die Formel 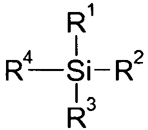 worin R¹ bis R⁴ unabhängig voneinander für einen organischen Rest oder für eine Hydroxygruppe stehen, mit der Maßgabe, dass mindestens zwei der Gruppen R¹ bis R⁴ für Gruppen, ausgewählt aus Hydroxygruppen und Alkoxygruppen, stehen und mindestens eine der übrigen Gruppen R¹ bis R⁴ für einen organischen Rest steht, der mindestens eine funktionelle Gruppe enthält, ausgewählt aus primären Aminogruppen, sekundären Aminogruppen, Säuregruppen, Säureanhydridgruppen, Carbamatgruppen, Isocyanatgruppen, Hydroxylgruppen und Epoxygruppen.

Vorzugsweise stehen zwei oder drei, besonders bevorzugt drei der Gruppen R¹ bis R⁴ für eine Hydroxygruppe oder eine Alkoxygruppen. Im Allgemeinen handelt es sich um Alkoxygruppen, bei der späteren Verwendung hydrolysieren die Alkoxygruppen dann zu Hydroxygruppen, die dann weiter reagieren, bzw. vernetzen. Insbesondere handelt es sich um eine C₁ bis C₉ -, vorzugsweise um eine C₁ bis C₆ -, besonders bevorzugt um eine C₁ bis C₃ Alkoxygruppe, ganz besonders bevorzugt handelt es sich um eine Methoxy- oder Ethoxygruppe, insbesondere um eine Methoxygruppe.

Die übrigen Gruppen R¹ bis R⁴ stehen für einen organischen Rest, dessen Molgewicht im allgemeinen kleiner 500 g/mol, insbesondere kleiner 200 g/mol, besonders bevorzugt kleiner 150 bzw. kleiner 100 g/mol ist. Bei den übrigen Gruppen R¹ bis R⁴ kann es sich z. B. um aliphatische oder aromatische Kohlenwasserstoffgruppen oder Kohlenwasserstoffgruppen mit sowohl aliphatischen, auch cycloaliphatischen, als auch aromatischen Bestandteilen handeln. Mindestens eine der übrigen Gruppen R¹ bis R⁴ steht für einen organischen Rest, der mindestens eine funktionelle Gruppe, ausgewählt aus einer primären oder sekundären Aminogruppe, einer Säuregruppe, Säureanhydridgruppe, Carbamatgruppe, Hydroxylgruppe, Isocyanatgruppe oder einer Epoxygruppe, enthält. Als funktionelle Gruppe besonders bevorzugt sind die primäre oder sekundäre Aminogruppe, Epoxygruppe, insbesondere Glycidylgruppe, oder die Carbamatgruppe. Besonders bevorzugt ist die Epoxygruppe, insbesondere Glycidylgruppe. Die übrigen Gruppen R¹ bis R⁴ können auch mehrere funktionelle Gruppen enthalten, z. B. zwei primäre Aminogruppen, zwei sekundäre Aminogruppen oder eine primäre und eine sekundäre Aminogruppe.

Bei bevorzugten Silane stehen drei der Reste R¹ bis R⁴ für eine Hydroxy- oder Alkoxygruppe (vorzugsweise Alkoxygruppe, siehe oben) und der eine übrige Rest für einen organischen Rest mit mindestens einer funktionellen Gruppe. Ebenfalls bevorzugt sind Silane, bei denen zwei der Reste R¹ bis R⁴ für eine Hydroxy- oder Alkoxygruppe (vorzugsweise Alkoxygruppe, siehe oben) und die beiden übrigen Reste jeweils für einen organischen Rest mit mindestens einer funktionellen Gruppe stehen. Besonders bevorzugt sind Glycidoxyalkyltrialkoxysilane mit jeweils 1 bis 5 C-Atomen in den Alkyl- und Alkoxygruppen. Als Silane in Betracht kommen beispielsweise 3-Glycidoxypropyltrimethoxysilan, 3-Glycidoxypropyltriethoxysilan, N-(2-Aminoethyl)-3-aminopropyltrimethoxysilan, 3-(Triethoxysilyl)propylbernsteinsäureanhydrid, N-Trimethoxysilylmethyl-O-methyl-carbamat.

Geeignete Silane sind insbesondere niedermolekular und haben ein Molgewicht unter 5000, insbesondere unter 2000, besonders bevorzugt unter 1000 und ganz besonders bevorzugt unter 500 g/mol; das Molgewicht liegt im allgemeinen oberhalb 50 insbesondere oberhalb 100, bzw. 150 g/mol.

Die Silanverbindungen werden vorzugsweise in Mengen von mehr als 0,2, insbesondere mehr als 1 oder mehr als 2 Gew. Teilen auf 100 Gew. Teile Polyurethan, und vorzugsweise maximal 30, insbesondere maximal 20, besonders bevorzugt maximal 10 Gew. Teilen auf 100 Gew.-Teile Polyurethan eingesetzt.

Ein Hauptbestandteil der ersten Klebstoffkomponente sind die Polyurethane als Bindemittel. Die erste Klebstoffkomponente besteht vorzugsweise zu mindestens 20 Gew. %, besonders bevorzugt zu mindestens 30 Gew. %, ganz besonders bevorzugt zu mindestens 40 Gew. % und insbesondere zu mindestens 50 Gew. %, bzw. zu mindestens 70 Gew. % aus den Polyurethanen, bezogen auf den Feststoffgehalt, d. h. ohne Wasser oder sonstige bei 21 °C und 1 bar flüssige Lösemittel. Die erste Klebstoffkomponente ist wässrig, das heißt sie enthält Wasser als überwiegendes oder einziges Lösemittel oder Dispergiermittel.

Die erste Klebstoffkomponente kann allein aus den Polyurethanen und der Silanverbindung bestehen, abgesehen von Wasser oder sonstigen Lösemitteln, die bei der Trocknung entweichen. Sie kann aber auch weitere Zusatzstoffe enthalten, z. B. weitere Bindemittel, Stabilisatoren, Füllstoffe, Verdicker, Benetzungshilfsmittel, Entschäumer, Vernetzer, Alterungsschutzmittel, Fungizide, Pigmente, lösliche Farbstoffe, Mattierungsmittel und Neutralisationsmittel. Weitere Zusatzstoffe können in einfacher Weise zum Polyurethan, bzw. zur wässrigen Dispersion des Polyurethans gegeben werden. Als Stabilisatoren sind grundsätzlich solche Stabilisatoren geeignet, wie sie bei wässrigen Dispersionen üblicherweise verwendet werden. Zu sehr lagerstabilen Polyurethandispersionszusammensetzungen führen Stabilisatoren ausgewählt aus der Gruppe umfassend Netzmittel, Cellulose, Polyvinylalkohol, Polyvinylpyrrolidon sowie Mischungen davon.

Als weitere Bindemittel, die im Gemisch mit den Polyurethanen verwendet werden können, kommen insbesondere radikalisch polymerisierte Polymere, vorzugsweise in Form ihrer wässrigen Dispersionen in Betracht. Derartige Polymere bestehen vorzugsweise zu mindestens 60 Gew.- % aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Als Polymere insbesondere zu erwähnen sind solche, die zu mehr als 60 Gew.-% aus C₁-C₂₀ Alkyl(meth)acrylaten aufgebaut sind (kurz Polyacrylate) oder solche, die zu mehr als 60 Gew. %, z. B. auch zu 100 Gew. % aus Vinylestern, insbesondere aus Vinylacetat und Ethylen bestehen (Vinylacetat/Ethylen Copolymer, EVA), oder solche, die zu mehr als 60 Gew. % aus Styrol und 1,3-Butadien bestehen (Styrol/Butadien Copolymere, insbesondere carboxylierte Styrol/Butadien Copolymere). Carboxylierte Styrol/Butadien Copolymere sind gebildet aus Styrol, Butadien und mindestens einem ethylenisch ungesättigten, radikalisch polymerisierbaren Monomer mit mindestens einer Carboxylgruppe, z.B. Acrylsäure, Methacrylsäure, Fumarsäure, Itaconsäure etc., vorzugsweise Acrylsäure. Wässerige Dispersionen aus Copolymeren bestehend aus 15-25 Gew. % Ethylen und 75-85 Gew. % Vinylacetat sind als zusätzliches Bindemittel besonders bevorzugt.

In einer besonderen Ausführungsform enthält der Klebstoff neben den Polyurethanen kein weiteres Bindemittel. In einer anderen Ausführungsform enthält der Klebstoff 10 bis 30 Gew.-Teile, oder 20 bis 30 Gew.-Teile, bezogen auf die Summe aller Klebstoffpolymere, an von Polyurethanen verschiedene Bindemittel, vorzugsweise Ethylen/ Vinylacetat Copolymere oder Styrol/Butadien Copolymere.

Bei den weiteren Bestandteilen des Klebstoffs kann es sich z. B. auch um weitere Vernetzer handeln. In Betracht kommen z. B. chemisch blockierte Isocyanate, verkapselte Isocyanate, verkapselte Uretdione, Biurete oder Allophanate oder Verbindungen mit Carbodiimidgruppen. Der zusätzliche Vernetzer kann an das Polyurethan gebunden sein, es kann sich aber auch um eine Verbindung handeln, die im Polyurethan gelöst oder verteilt ist. Der Klebstoff benötigt zur Erreichung der gewünschten Eigenschaften keine weiteren Vernetzer, vorzugsweise enthält der Klebstoff daher auch keine weiteren Vernetzer.

Besonders vorteilhaft sind Zusammensetzungen, welche frei von organischen Lösungsmitteln, insbesondere frei von sogenannten VOCs (Volatile Organic Compounds) und/oder frei von Weichmachern sind. Sowohl Weichmacher als auch organische Lösungsmittel sind vom ökotoxikologischen und arbeitshygienischen Standpunkt aus nachteilig. Weichmacher können an die Oberfläche migrieren und zum Versagen einer Verklebung führen oder dazu führen, dass die Oberfläche klebrig wird, was zu Verschmutzungen der Klebfugen führt. Auch Lösungsmittel sind unerwünscht, da sie einerseits zusätzliches Gefahrenpotential beim Aufheizen und bei der Applikation des Klebstoffs mit sich bringen können und weil sie andererseits ebenfalls migrieren und über lange Zeit an die Umwelt und an Materialien, welche in Kontakt mit dem Klebstoff stehen, abgegeben werden können und diese negativ beeinflussen können, beziehungsweise zum Versagen der Verklebung führen. Daher handelt es sich bei der ersten Klebstoffkomponente vorzugweise um ein rein wässriges System mit Wasser als einzigem Lösungsmittel bzw. als einzigem Dispersionsmedium. Der Feststoffgehalt, das heißt der Gehalt aller Bestandteile außer Wasser oder sonstigen, bei 21 °C und 1 bar flüssigen Stoffen liegt vorzugsweise zwischen 20 und 80 Gew.-%.

Der erfindungsgemäße Klebstoff kann als zweikomponentiger (2K) Klebstoff verwendet werden. Bei einem 2K Klebstoff wird vor der Verwendung noch ein weiterer Zuatzstoff, im Allgemeinen ein Vernetzer, im vorliegenden Fall das Silan, zugesetzt. Besonders geeignet ist der erfindungsgemäße Klebstoff als Kaschierklebstoff, insbesondere zur Herstellung von Verbundkörpern durch dauerhafte Verklebung von großflächigen, biegsamen Folien auf festen Formkörpern als Substrat. Die biegsamen Folien sind insbesondere ausgewählt aus Polymerfolien und Metallfolien. Sie werden mit den festen Formkörpern, z. B. Formteilen aus Metall, lackiertem Metall, Holz, Holzwerkstoffen, Fasermaterialien oder Kunststoff verklebt. Bei den Formteilen kann es sich um Möbel oder um Möbelteile, d.h. um Bestandteile von Möbeln handeln.

Gegenstand der Erfindung ist auch ein Verfahren zur Herstellung von folienbeschichteten Möbeln oder Möbelteilen, wobei
a) eine oben beschriebene, erfindungsgemäße erste Klebstoffkomponente und eine oben beschriebene, erfindungsgemäße zweite Klebstoffkomponente, eine Folie und als Substrat ein Möbelstück oder ein Teil eines Möbelstücks zur Verfügung gestellt werden,
b) die Klebstoffkomponenten vermischt werden und auf die Folie und/oder auf das Substrat aufgebracht werden und
c) anschließend die Folie unter Druck und/oder Temperaturerhöhung mit dem Substrat verklebt wird.

Bei den erfindungsgemäß hergestellten folienbeschichteten Möbeln handelt es sich um Verbundkörper. Die Verbundkörper können zwischen Folie und Klebstoffschicht und/oder zwischen Substrat und Klebstoffschicht zusätzlich Primerschichten zur Haftverbesserung aufweisen. Die zu verklebenden Folien und Substrate können mit Haftvermittlern vorbehandelt sein. Aufgrund der bereits guten Hafteigenschaften erfindungsgemäßer Klebstoffe ist die Anwendung von Primern aber nicht unbedingt erforderlich.

Besonders bevorzugte Folien sind Polymerfolien. Als Polymerfolie werden insbesondere biegsame flächige Kunststoffe in einer Dicke von 0.05 Millimeter bis 1 Millimeter, vorzugsweise von 0,25 bis 0,4 mm verstanden, die sich aufrollen lassen. Derartige Kunststofffolien werden üblicherweise durch Streichen, Giessen, Extrusion oder besonders bevorzugt durch Kalandrieren hergestellt und sind typischerweise in Rollen kommerziell erhältlich oder werden vor Ort hergestellt. Sie können einschichtig oder mehrschichtig aufgebaut sein. Der Kunststoff der Polymerfolien ist vorzugsweise ein thermoplastischer Kunststoff, z.B. Polyester, wie Polyethylenterephthalat (PET), thermoplastische Polyolefine (TPO) wie Polyethylen, Polypropylen, Polyvinylchlorid, insbesondere Weich-PVC, Polyacetate, EthylenNinylacetat Copolymere (EVA), ASA (Acrylnitril/Styrol/Acrylsäureester Copolymere), PUR (Polyurethan), PA (Polyamid), Poly(meth)acrylate, Polycarbonate, oder deren Kunststofflegierungen. Besonders bevorzugt sind Hart-PVC und thermoplastisches Polyethylenterephthalat (PET).

Bei den Möbelteilen kann es sich auch um Formteile handeln, welche aus synthetischen oder natürlichen Fasern oder Spänen aufgebaut sind, die durch ein Bindemittel zu einem Formteil gebunden sind. Die Formteile können eine beliebige Form haben. Besonders bevorzugt sind MDF-Platten (mitteldichte Holzfaserplatten).

Die Beschichtung der Folien und Substrate mit dem Klebstoff kann nach üblichen Auftragsverfahren erfolgen, beispielsweise durch ein Sprüh-, Streich-, Rakel-, Stempel-, Walz- oder Gießauftragsverfahren. Bevorzugt ist ein Sprühauftrag.

Die aufgebrachte Klebstoffmenge beträgt vorzugsweise 0,5 bis 100 g/m2, besonders bevorzugt 2 bis 80 g/m2, ganz besonders bevorzugt 10 bis 70 g/m2, bezogen auf Klebstoff. Vorzugsweise wird nur die Folie oder nur das Substrat einseitig beschichtet. Es kommt jedoch auch eine Beschichtung von beiden zu verklebenden Einheiten, d.h. von Folie und Substrat in Betracht. Nach der Beschichtung erfolgt üblicherweise eine Trocknung, vorzugsweise bei Raumtemperatur oder Temperaturen bis zu 80 °C, um Wasser oder sonstige Lösemittel zu entfernen.

Die mit einer oder zwei Klebstoffkomponenten beschichtete Folie oder das beschichtete Substrat können vor der Verklebung gelagert werden. Flexible Folien können z. B. auf Rollen aufgewickelt werden. Zur Verklebung werden die zu verklebenden Teile zusammengefügt. Der Klebstoff wird thermisch aktiviert. Die Temperatur in der Klebstoffschicht beträgt vorzugsweise mindestens 30°C oder mindestens 40 °C, z.B. von 30 bis 200 °C, oder von 40 bis 180°C. Ein besonderer Vorteil der Erfindung liegt in einer guten Aktivierbarkeit des Klebstoffs auch bei Temperaturen unterhalb des mit herkömmlichen Klebstoffen verwendeten Temperaturbereiches von 60-70°C, z.B. bei Temperaturen von maximal 55 °C oder maximal 50 °C oder maximal 40°C.

Die Verklebung erfolgt vorzugsweise unter Druck. Dazu können z.B. die zu verklebenden Teile mit einem Druck von mindestens 0,005 oder mindestens 0,01 oder mindestens 0,08 N/mm², z.B. 0,005 bis 5 N/mm² oder 0,01 bis 0,8 N/mm² zusammengepresst werden. Der Anpressdruck kann z.B. durch das Anlegen eines Unterdruckes zwischen Folie und Substrat und/oder durch Luftdruck erzeugt.

Die erhaltenen Verbundkörper zeichnen sich durch hohe mechanische Festigkeit auch bei erhöhten Temperaturen (Wärmestandfestigkeit) aus.

Besondere Bedeutung hat das erfindungsgemäße Verfahren für die Herstellung von mit Folien, insbesondere mit Dekorfolien kaschierten MDF-Platten für Möbelfronten. Hierfür wird insbesondere das sogenannte 3D-Pressverfahren verwendet. Die Klebstoffkomponenten werden miteinander vermischt und auf den Formkörper, z.B. eine MDF-Platte aufgetragen. Anschließend erfolgt gegebenenfalls ein Trocknen, z.B. bei Raumtemperatur oder im Trockenkanal bei z.B. 40-50°C. Der getrocknete Klebstoff wird mittels der vorgewärmten Folie thermoaktiviert und auf das Substrat gepresst, z.B. unter Vakuum und/oder durch Luftdruck.

Die hier benutzten Folien sind vielfach Kunststoffdekorfolien und können eine Oberflächenstruktur aufweisen. Diese Oberflächenstruktur auf der Kunststofffolie kann beispielsweise vor, während oder nach dem Verkleben eingeprägt werden.

### Beispiele

Alle Prozentangaben sind Gewichtsangangaben, wenn nichts anderes angegeben ist. Die Angabe eines Gehalts bezieht sich auf den Gehalt in wässriger Lösung oder Dispersion. Die Bestimmung der Viskosität kann nach DIN EN ISO 3219 bei einer Temperatur von 23 °C mit einem Rotationsviskosimeter erfolgen.

Einsatzstoffe:
Silan 1: 3-Glycidoxypropyltrimethoxysilan, erhältlich als Geniosil^{®} GF 80 (Wacker-Chemie GmbH)
Silan 2: 3-Glycidoxypropyltriethoxysilan, erhältlich als Geniosil^{®} GF 82 (Wacker-Chemie GmbH)

Andere Vernetzer (zum Vergleich):
Basonat^{®} F 200 WD, ein selbst emulgierendes Isocyanat welches von BASF SE für die Vernetzung von wässerigen Dispersionen vermarktet wird.

Polyurethandispersionen:
Luphen^{®} D 200 A:
   wässrige Dispersion eines Polyurethans mit von Polyesterdiolen abgeleiteten Einheiten, welche von BASF SE für technische Kaschierungen vermarktet wird.

PU-1:
   Dispersion eines Polyurethans, hergestellt aus Poly(tetrahydrofuran) mit Molekulargewicht Mn ca. 2000, Dimethylolpropionsäure, Isophorondiisocyanat und Isophorondiamin, neutralisiert mit Triethylamin; Feststoffgehalt 50 Gew.%, K-Wert 40, Viskosität 68 mPas, pH 6,8.
PU-2:
   Dispersion eines Polyurethans, hergestellt aus Poly(propylenoxid) mit Molekulargewicht Mn ca. 2000, Dimethylolpropionsäure, Neopentylglykol, Toluylendiisocyanat, neutralisiert mit NaOH; Feststoffgehalt 40 Gew.%, K-Wert 47, Viskosität 167 mPas, pH 7,6.

### Herstellung der Klebstoffe:

12,5 Gew.Teile des Vernetzers (fest, ohne Wasser, Lösemittel) auf 100 Gew. Polyurethan (fest, ohne Wasser) wurden in die Polyurethandispersionen eingerührt.

| Klebstoff | Polyester-Polyurethan ¹⁾ | Polyether-Polyurethan ¹⁾ | Vernetzer |
|---|---|---|---|
| K1 | Luphen^{®} D 200 A (50%) | PU-1 (50%) | Silan 1 |
| K2 | Luphen^{®} D 200 A (80%) | PU-1 (20%) | Silan 1 |
| K3 | Luphen^{®} D 200 A (80%) | PU-2 (20%) | Silan 1 |
| V1 | Luphen^{®} D 200 A | - | - |
| V2 | Luphen^{®} D 200 A | - | Basonat^{®} F200WD |
| V3 | Luphen^{®} D 200 A | - | Silan 1 |
| V4 | Luphen^{®} D 200 A | - | Silan 2 |
| V5 | - | PU-1 | Silan 1 |

| | | | |
|---|---|---|---|
| ¹⁾ Mengenangaben in Gew.-%, bezogen auf Gesamtmenge an Polyurethanen | | | |

Prüfung der Wärmestandfestigkeit:
38-40 g /m² (fest) des Klebstoffes wurden auf ein Faserformteil mit dreidimensionaler Oberfläche, wie es zur Herstellung von Möbelformteilen verwendet wird, aufgesprüht und getrocknet. In einer handelsüblichen Vakuum-Tiefzieh-Presse (Bürkle Thermoformer) wurde eine Hart-PVC-Möbelfolie (Roxan Typ 5371744 Buche Taunus) zukaschiert. Die Kaschierung erfolgte bei einer Heizplatten-Temperatur von 121 °C, und einem Druck von 4,5 bar; der Druck wurde während 45 Sekunden aufrecht erhalten. Die Vakuuumzeit betrug etwa 6 s. Das erhaltene Formteil ist bis zum Rand mit der Folie kaschiert.

Die Kaschierung aus Formteil und Folie wurde zunächst 7 Tage bei Raumtemperatur gelagert. Danach erfolgte eine Lagerung bei 75 °C bis 90 °C, wobei die LagerungsTemperatur jede Stunde um 5 °C erhöht wurde, beginnend bei 75°C. Nach jeder Stunde wurde an den Rändern des Formteils ausgemessen, ob und wieweit die kaschierte Folie geschrumpft ist, d. h. wie viel mm sich der Folienrand vom Rand des Formteils in Richtung Mitte des Prüfkörpers bewegt hat. Je geringer dieser Wert ist, umso besser ist die Wärmestandfestigkeit.

**Tabelle 1: Schrumpfung der Folie in Millimeter**

| Klebstoff | 75°C | 80°C | 85°C | 90°C |
|---|---|---|---|---|
| K1 | 0,2 | 0,2 | 0,3 | 0,5 |
| K2 | 0,2 | 0,4 | 0,5 | 0,5 |
| K3 | 0,2 | 0,3 | 0,4 | 0,5 |
| V1 | 1 | 2 | 2 | 3 |
| V2 | 0,3 | 0,4 | 0,6 | 0,7 |
| V3 | 0,4 | 0,5 | 0,6 | 0,7 |
| V4 | 0,5 | 0,7 | 0,8 | 0,8 |
| V5 | 0,6 | 0,7 | abgelöst | abgelöst |

Die Tabelle 1 zeigt, dass die erfindungsgemäßen Klebstoffe K1 bis K3 bessere Ergebnisse erreichen als die Vergleichszusammensetzungen V1 bis V5.

### Prüfung der Aktivierungstemperaturen

Eine hart-PVC Möbelfolie (Roxan Typ 5371744 Buche Taunus) wird mit einem 1 mm Drahtrakel mit dem zu prüfenden Klebstoff beschichtet und bei Raumtemperatur (20°C) 1 bis 2 Stunden getrocknet. Es wird sensorisch durch Anfühlen beurteilt, ob die beschichteten Folien bei Raumtemperatur (20°C) klebrig sind. Die beschichteten Folien werden 30 Sekunden lang bei einem Druck von 0,40 N/mm² in einer beheizten Presse mit einem zweiten Stück Hart PVC-Folie (Roxan Typ 5371744 Buche Taunus) bei unterschiedlichen Temperaturen (35, 40 und 45°C) verpresst. Die Haftkraft der so erhaltenen Prüfkörper wird 1 Minute nach dem Verpressen geprüft und in N/5 cm angegeben.

Die Haftkraft (Peel Test, Schälfestigkeit) wird wie folgt untersucht:
Es werden Prüfstreifen in einer Breite von 5 cm hergestellt. Die Prüfung erfolgt bei Normklima an einer Zugprüfmaschine. Nach Ablauf der vorgegebenen Verweilzeit wird der Prüfstreifen vom unteren Ende her zur Hälfte abgezogen und im Winkel von 180° nach oben geschlagen. Das nun freie Ende des Prüfsubstrates wird in die Zugprüfmaschine eingespannt und der Prüfstreifen wird im Winkel von 180 Grad mit einer Maschinengeschwindigkeit von 300 mm/Minute abgezogen. Nach jeder Messung wird das Prüfsubstrat erneuert. Es werden mindestens 3 Einzelmessungen durchgeführt. Die Angabe der Prüfergebnisse erfolgt in N/5 cm Breite.

**Tabelle 2: Klebrigkeit bei Raumtemperatur und Haftkraft bei verschiedenen Aktivierungstemperaturen in N/5 cm**

| Klebstoff | fühlbar klebrig | 35°C | 40°C | 45°C |
|---|---|---|---|---|
| K1 | nein | 27 | 64 | 61 |
| K2 | nein | 2 | 61 | 67 |
| V3 | nein | 0,2 | 4 | 15 |
| V5 | ja | 43 | 47 | 52 |

Die Tabelle 2 zeigt, dass K1, K2 und V 3 bei Raumtemperatur nicht fühlbar klebrig sind. V5 ist klebrig, was ein anwendungstechnischer Nachteil, insbesondere hinsichtlich der Herstellung von blockfesten vorbeschichteten Folien ist. Der Klebstoff V3 bildet erst bei Temperaturen >45°C genug Haftkraft aus um als ausreichend aktiviert zu gelten. K1 und K2 sind bereits bei 40°C ausreichend aktivierbar und zeigen eine weit höhere Haftkraft. K1 ist sogar bereits bei 35° aktivierbar. V5 zeigt zwar bei 35°C die höchste Haftkraft, hat allerdings durch die Klebrigkeit bei Raumtemperatur anwendungstechnische Nachteile. Die erfindungsgemäßen Klebstoffe K1 und K2 zeichnen sich dadurch aus, dass sie bei niedrigen Temperaturen aktivierbar sind aber gleichzeitig bei Raumtemperatur nicht klebrig sind.

## Patentansprüche

1. Verwendung eines Klebstoffs bestehend aus einer ersten, wässrigen Komponente und aus einer zweiten Komponente,
wobei die erste Komponente mindestens ein erstes Polyurethan und mindestens ein von dem ersten Polyurethan verschiedenes zweites Polyurethan enthält, wobei das erste Polyurethan von Polyesterdiolen abgeleitete Einheiten aufweist und das zweite Polyurethan mit von Polyetherdiolen abgeleitete Einheiten aufweist,
und wobei mindestens eines der beiden Polyurethane Carboxylgruppen aufweist, wobei das Gewichtsmengenverhältnis der Summe aller von Polyesterdiolen abgeleiteten Einheiten zur Summe aller von Polyetherdiolen abgeleiteten Einheiten von 1:9 bis 9:1 beträgt, und
wobei die zweite Komponente mindestens eine gegenüber Carboxylgruppen reaktive Silanverbindung enthält,
zur Herstellung von folienbeschichteten Möbeln.

2. Verwendung gemäß Anspruch 1, **dadurch gekennzeichnet, dass** die erste Komponente
(a) 20-80 Gewichtsteile mindestens eines ersten Polyurethans mit von Polyesterdiolen abgeleiteten Einheiten und ohne von Polyetherdiolen abgeleiteten Einheiten,
(b) 10-70 Gewichtsteile mindestens eines zweiten Polyurethans mit von Polyetherdiolen abgeleiteten Einheiten und ohne von Polyesterdiolen abgeleiteten Einheiten und
(c) 0-60 Gewichtsteile weiterer, von Polyurethanen verschiedene Polymere enthält.

3. Verwendung gemäß Anspruch 2, **dadurch gekennzeichnet, dass** das erste Polyurethan aufgebaut ist aus
a) Diisocyanaten,
b) Polyesterdiolen mit einem Molgewicht von größer 500 bis 5000 g/mol,
c) Carbonsäuregruppen aufweisenden Diolen, und
d) optional weitere, von a)-c) verschiedene, ein- oder mehrwertige Verbindungen mit reaktiven Gruppen, ausgewählt aus alkoholischen Hydroxygruppen, primären Aminogruppen, sekundären Aminogruppen und Isocyanatgruppen,
und das zweite Polyurethan aufgebaut ist aus
a) Diisocyanaten.
b) Polyetherdiolen mit einem Molgewicht von 240 bis 5000 g/mol,
c) Carbonsäuregruppen aufweisenden Diolen, und
d) optional weitere, von a)-c) verschiedene, ein- oder mehrwertige Verbindungen mit reaktiven Gruppen, ausgewählt aus alkoholischen Hydroxygruppen, primären Aminogruppen, sekundären Aminogruppen und Isocyanatgruppen,

4. Verwendung gemäß einem der vorhergehenden Ansprüche, **dadurch gekennzeichnet, dass** die Polyetherdiole ausgewählt sind aus Polytetrahydrofuran und Polypropylenoxid und die Polyesterdiole ausgewählt sind aus Umsetzungsprodukten zweiwertiger Alkohole mit zweiwertigen Carbonsäuren und Polyesterdiolen auf Lacton-Basis.

5. Verwendung gemäß einem der vorhergehenden Ansprüche, **dadurch gekennzeichnet, dass** 10 bis 30 Gew.-Teile Ethylen/Vinylacetat Copolymere als von Polyurethanen verschiedene Polymere enthalten sind.

6. Verwendung gemäß einem der vorhergehenden Ansprüche, **dadurch gekennzeichnet, dass** die Silanverbindung die Formel 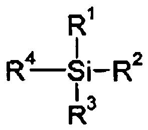 aufweist, worin R¹ bis R⁴ unabhängig voneinander für einen organischen Rest oder für eine Hydroxygruppe stehen, mit der Maßgabe, dass mindestens zwei der Gruppen R¹ bis R⁴ für Gruppen, ausgewählt aus Hydroxygruppen und Alkoxygruppen, stehen und mindestens eine der übrigen Gruppen R¹ bis R⁴ für einen organischen Rest steht, der mindestens eine funktionelle Gruppe enthält, ausgewählt aus primären Aminogruppen, sekundären Aminogruppen, Säuregruppen, Säureanhydridgruppen, Carbamatgruppen, Isocyanatgruppen, Hydroxylgruppen und Epoxygruppen.

7. Verwendung gemäß dem vorhergehenden Anspruch, **dadurch gekennzeichnet, dass** zwei oder drei der Gruppen R¹ bis R⁴ für eine Alkoxygruppe stehen.

8. Verwendung gemäß einem der vorhergehenden Ansprüche, **dadurch gekennzeichnet, dass** die Silanverbindung ein Glycidoxyalkyltrialkoxysilan ist mit jeweils 1 bis 5 C-Atomen in den Alkylgruppen und in den Alkoxygruppen.

9. Verwendung gemäß einem der vorhergehenden Ansprüche, **dadurch gekennzeichnet, dass** mehr als 0,2 und maximal 30 Gew.-Teile des Silans auf 100 Gew.-Teile Polyurethane eingesetzt werden.

10. Verwendung gemäß einem der vorhergehenden Ansprüche, **dadurch gekennzeichnet, dass** er mindestens einen weiteren Zusatzstoff enthält der ausgewählt ist aus weiteren Bindemitteln, Stabilisatoren, Füllstoffen, Verdickern, Benetzungshilfsmitteln, Entschäumern, Vernetzern, Alterungsschutzmitteln, Fungiziden, Pigmenten, löslichen Farbstoffen, Mattierungsmitteln und Neutralisationsmitteln.

11. Verwendung gemäß einem der vorhergehenden Ansprüche, **dadurch gekennzeichnet, dass** die Polyurethane in Wasser dispergiert sind, es sich also um eine wässrige Polyurethandispersion handelt

12. Verwendung gemäß einem der vorhergehenden Ansprüche, **dadurch gekennzeichnet, dass** das erste Polyurethan in reinem Zustand kristallin ist und einen Schmelzpunkt im Bereich von 30 bis 150 °C hat.

13. Verwendung gemäß einem der vorhergehenden Ansprüche, **dadurch gekennzeichnet, dass** die erste Komponente zu mindestens 40 Gew.-% aus Polyurethanen besteht, bezogen auf den Feststoffgehalt.

14. Verfahren zur Herstellung von folienbeschichteten Möbeln oder Möbelteilen, wobei
a) eine erste Klebstoffkomponente und eine zweite Klebstoffkomponente gemäß einem der Ansprüche 1 bis 13, eine Folie und als Substrat ein Möbelstück oder ein Teil eines Möbelstücks zur Verfügung gestellt werden,
b) die Klebstoffkomponenten vermischt werden und auf die Folie und/oder auf das Substrat aufgebracht werden und
c) anschließend die Folie unter Druck und/oder Temperaturerhöhung mit dem Substrat verklebt wird.

15. Möbelstück auf welches eine flexible Folie mit einem Klebstoff gemäß einem der Ansprüche 1 bis 13 geklebt ist

16. Möbelstück nach dem vorhergehenden Anspruch, **dadurch gekennzeichnet, dass** es sich um eine folienbeschichtete MDF-Platte handelt.

## Claims

1. The use of an adhesive consisting of a first, aqueous component and of a second component,
the first component comprising at least one first polyurethane and at least one second polyurethane other than the first polyurethane,
the first polyurethane comprising units derived from polyester diols and the second polyurethane comprising units derived from polyether diols,
and at least one of the two polyurethanes comprising carboxyl groups,
the weight quantity ratio of the sum total of all units derived from polyester diols to the sum total of all units derived from polyether diols being in the range from 1:9 to 9:1, and
the second component comprising at least one silane compound reactive toward carboxyl groups,
in the manufacture of film/foil-coated furniture.

2. The use according to claim 1, wherein the first component comprises
(a) 20-80 parts by weight of at least one first polyurethane with units derived from polyester diols and without units derived from polyether diols,
(b) 10-70 parts by weight of at least one second polyurethane with units derived from polyether diols and without units derived from polyester diols, and
(c) 0-60 parts by weight of further polymers other than polyurethanes.

3. The use according to claim 2, wherein the first polyurethane is synthesized from
a) diisocyanates,
b) polyester diols having a molecular weight of greater than 500 to 5000 g/mol,
c) diols comprising carboxylic acid groups, and
d) optionally further, non-a)-c), monofunctional or polyfunctional compounds having reactive groups selected from alcoholic hydroxyl groups, primary amino groups, secondary amino groups, and isocyanate groups,
and the second polyurethane is synthesized from
a) diisocyanates,
b) polyether diols having a molecular weight of 240 to 5000 g/mol,
c) diols comprising carboxylic acid groups, and
d) optionally further, non-a)-c), monofunctional or polyfunctional compounds having reactive groups selected from alcoholic hydroxyl groups, primary amino groups, secondary amino groups, isocyanate groups.

4. The use according to any of the preceding claims, wherein the polyether diols are selected from polytetrahydrofuran and polypropylene oxide and the polyester diols are selected from reaction products of dihydric alcohols with dibasic carboxylic acids, and lactone-based polyester diols.

5. The use according to any of the preceding claims, wherein 10 to 30 parts by weight of ethylene-vinyl acetate copolymers are present as polymers other than polyurethanes.

6. The use according to any of the preceding claims, wherein the silane compound has the formula 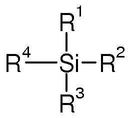 in which R¹ to R⁴ each independently are an organic radical or a hydroxyl group, with the proviso that at least two of the groups R¹ to R⁴ are groups selected from hydroxyl groups and alkoxy groups, and at least one of the remaining groups R¹ to R⁴ is an organic radical which contains at least one functional group selected from primary amino groups, secondary amino groups, acid groups, acid anhydride groups, carbamate groups, isocyanate groups, hydroxyl groups, and epoxy groups.

7. The use according to the preceding claim, wherein two or three of the groups R¹ to R⁴ are an alkoxy group.

8. The use according to any of the preceding claims, wherein the silane compound is a glycidyloxyalkyltrialkoxysilane having in each case 1 to 5 C atoms in the alkyl groups and in the alkoxy groups.

9. The use according to any of the preceding claims, wherein more than 0.2 and not more than 30 parts by weight of the silane are used per 100 parts by weight of polyurethanes.

10. The use according to any of the preceding claims, which comprises at least one further additive selected from further binders, stabilizers,
fillers, thickeners, wetting assistants, defoamers, crosslinkers, aging inhibitors, fungicides, pigments, soluble dyes, matting agents, and neutralizing agents.

11. The use according to any of the preceding claims, wherein the polyurethanes are in dispersion in water, and the system is therefore an aqueous polyurethane dispersion.

12. The use according to any of the preceding claims, wherein the first polyurethane is crystalline in the pure state and has a melting point in the range from 30 to 150°C.

13. The use according to any of the preceding claims, wherein the first component consists of polyurethanes to an extent of at least 40% by weight, based on the solids content.

14. A method of producing film/foil-coated furniture or furniture parts, where
a) a first adhesive component and a second adhesive component according to any of claims 1 to 13, a film/foil, and as substrate a piece of furniture or a part of a piece of furniture are made available,
b) the adhesive components are mixed and the mixture is applied to the film/foil and/or to the substrate, and
c) subsequently the film/foil is bonded to the substrate under pressure and/or temperature increase.

15. A furniture piece to which a flexible film/foil is adhered using an adhesive according to any one of claims 1 to 13.

16. The furniture piece according to the preceding claim, comprising film/foil-coated MDF board.

## Revendications

1. Utilisation d'un adhésif constitué par un premier composant aqueux et un deuxième composant, le premier composant contenant au moins un premier polyuréthane et au moins un deuxième polyuréthane différent du premier polyuréthane, le premier polyuréthane présentant des unités dérivées de polyesterdiols et le deuxième polyuréthane présentant des unités dérivées de polyétherdiols, au moins un des deux polyuréthanes présentant des groupes carboxyle, le rapport des quantités pondérales de la somme de toutes les unités dérivées des polyesterdiols à la somme de toutes les unités dérivées des polyétherdiols valant 1:9 à 9:1, et le deuxième composant contenant au moins un composé de silane réactif par rapport aux groupes carboxyle, pour la préparation de meubles revêtus par des feuilles.

2. Utilisation selon la revendication 1, **caractérisée en ce que** le premier composant contient
(a) 20-80 parties en poids d'au moins un premier polyuréthane présentant des unités dérivées de polyesterdiols et sans unités dérivées de polyétherdiols,
(b) 10-70 parties en poids d'au moins un deuxième polyuréthane présentant des unités dérivées de polyétherdiols et sans unités dérivées de polyesterdiols et
(c) 0-60 parties en poids d'autres polymères, différents des polyuréthanes.

3. Utilisation selon la revendication 2, **caractérisée en ce que** le premier polyuréthane est formé à partir de
a) diisocyanates,
b) polyesterdiols présentant un poids molaire supérieur à 500 jusqu'à 5000 g/mole,
c) diols présentant des groupes acide carboxylique, et
d) éventuellement d'autres composés monofonctionnels ou polyfonctionnels, différents de a)-c), présentant des groupes réactifs choisis parmi les groupes hydroxy alcooliques, les groupes amino primaires, les groupes amino secondaires et les groupes isocyanate, **en ce que**
le deuxième polyuréthane est formé à partir de
a) diisocyanates,
b) polyétherdiols présentant un poids molaire de 240 à 5000 g/mole,
c) diols présentant des groupes acide carboxylique, et
d) éventuellement d'autres composés monofonctionnels ou polyfonctionnels, différents de a)-c), présentant des groupes réactifs choisis parmi les groupes hydroxy alcooliques, les groupes amino primaires, les groupes amino secondaires et les groupes isocyanate.

4. Utilisation selon l'une quelconque des revendications précédentes, **caractérisée en ce que** les polyétherdiols sont choisis parmi le polytétrahydrofuranne et le poly(oxyde de propylène) et les polyesterdiols sont choisis parmi les produits de transformation d'alcools divalents avec des acides carboxyliques divalents et des polyesterdiols à base de lactone.

5. Utilisation selon l'une quelconque des revendications précédentes, **caractérisée en ce que** 10 à 30 parties en poids de copolymères d'éthylène/acétate de vinyle sont contenues comme polymères différents de polyuréthanes.

6. Utilisation selon l'une quelconque des revendications précédentes, **caractérisée en ce que** le composé silane présente la formule 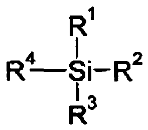 dans laquelle R¹ à R⁴ représentent, indépendamment les uns des autres, un radical organique ou un groupe hydroxy, à condition qu'au moins deux des groupes R¹ à R⁴ représentent des groupes choisis parmi les groupes hydroxy et alcoxy et au moins un des autres groupes R¹ à R⁴ représente un radical organique, qui contient au moins un groupe fonctionnel, choisi parmi les groupes amino primaires, les groupes amino secondaires, les groupes acides, les groupes anhydride d'acide, les groupes carbamate, les groupes isocyanate, les groupes hydroxyle et les groupes époxy.

7. Utilisation selon la revendication précédente, **caractérisée en ce que** deux ou trois des groupes R¹ à R⁴ représentent un groupe alcoxy.

8. Utilisation selon l'une quelconque des revendications précédentes, **caractérisée en ce que** le composé silane est un glycidoxyalkyltrialcoxysilane comprenant à chaque fois 1 à 5 atomes de carbone dans les groupes alkyle et dans les groupes alcoxy.

9. Utilisation selon l'une quelconque des revendications précédentes, **caractérisée en ce qu'**on utilise plus de 0,2 et au maximum 30 parties en poids de silane par rapport à 100 parties en poids de polyuréthane.

10. Utilisation selon l'une quelconque des revendications précédentes, **caractérisée en ce qu'**au moins un autre additif est contenu, qui est choisi parmi d'autres liants, stabilisants, charges, épaississants, adjuvants de mouillage, antimousses, réticulants, agents de protection contre le vieillissement, fongicides, pigments, colorants solubles, agents de matage et agents de neutralisation.

11. Utilisation selon l'une quelconque des revendications précédentes, **caractérisée en ce que** les polyuréthanes sont dispersés dans l'eau et il s'agit donc d'une dispersion aqueuse de polyuréthane.

12. Utilisation selon l'une quelconque des revendications précédentes, **caractérisée en ce que** le premier polyuréthane est cristallin à l'état pur et présente un point de fusion dans la plage de 30 à 150°C.

13. Utilisation selon l'une quelconque des revendications précédentes, **caractérisée en ce que** le premier composant est constitué, à raison d'au moins 40% en poids, de polyuréthanes, par rapport à la teneur en solides.

14. Procédé pour la préparation de meubles ou de parties de meubles, revêtus par une feuille,
a) un premier composant adhésif et un deuxième composant adhésif selon l'une quelconque des revendications 1 à 13, une feuille et, comme substrat, un élément de meuble ou une partie de meuble étant mis à disposition,
b) les composants adhésifs étant mélangés et appliqués sur la feuille et/ou sur le substrat et
c) ensuite, la feuille étant collée avec le substrat sous pression et/ou augmentation de la température.

15. Elément de meuble sur lequel est collée une feuille souple présentant un adhésif selon l'une quelconque des revendications 1 à 13.

16. Elément de meuble selon la revendication précédente, **caractérisé en ce qu'**il s'agit d'une plaque en MDF revêtue d'une feuille.
